Europäisches Patentamt

European Patent Office

Office européen des brevets

(19)

(11) Publication number: **0 314 043**
**A2**

(12) **EUROPEAN PATENT APPLICATION**

(21) Application number: 88117674.7

(22) Date of filing: 24.10.88

(51) Int. Cl.⁴: **B65D 5/56 , B32B 15/12**

(30) Priority: 27.10.87 IT 8348287

(43) Date of publication of application:
**03.05.89 Bulletin 89/18**

(84) Designated Contracting States:
**AT BE CH DE ES FR GB GR LI LU NL SE**

(71) Applicant: **BIOGRAF DI VENTURINI A. & C. S.N.C.**
**Via G. Rossa 19**
**I-48010 Fusignano (RA)(IT)**

(72) Inventor: **Venturini, Vittorio**
**Via Sicilia 8A**
**Bagnacavallo (RA)(IT)**

(74) Representative: **D'Agostini, Giovanni, Dr.**
**D'AGOSTINI ORGANIZZAZIONE n. 17 via G.Giusti**
**I-33100 Udine(IT)**

(54) Production method for metallized laminated plastic cardboard, in particular for alimentary use, and respective product.

(57) Production method for metallized, laminated plastic cardboard, of the type involving a supporting structure in cardboard (b), with laminated plastic (a) on the surface in contact with foodstuffs and a metallized layer (a4) interposed between the laminated plastic (a) and cardboard (b), where said laminated plastic comprises the sizing (a5) to the cardboard (b) with at least one stabilized, two-faced, coextruding, polypropylene film (a) with the upper surface in heat-welded copolymer (a1) and the lower surface in metallizable monomer (a3), with metallized layer having a low degree of coverage with deposit parameters between 2 and 5 Ohm, preferably 2.5-3.5 Ohm, and in any case for a 30%-80% degree of coverage, preferably 50%-60%.

FIG.2

EP 0 314 043 A2

# PRODUCTION METHOD FOR METALLIZED LAMINATED PLASTIC CARDBOARD IN PARTICULAR FOR ALIMENTARY USE AND RESPECTIVE PRODUCT

The subject of the present invention is a production method for metallized, laminated plastic cardboard, in particular for alimentary use and respective product.

The invention has a particular and convenient although not exclusive application for the realization of trays for foodstuffs and therefore as a means to package desserts, cakes, dry and fresh pastries and hot and cold goods including, for example, take-away pizzas. However, this list is not to be considered complete as there can be a wide range of purposes.

The use of cardboard trays and packs is known in the present state of art, these being traditionally covered by paper for alimentary use on the outside surface and sized with an aluminium sheet on the inside surface in contact with food.

The aluminium sheet which covers the cardboard is of particular importance as its function is to prevent the cardboard absorbing liquids from the foodstuffs or their loss from the pack and, by its reflecting function, avoid a rapid heat dispersion of the packaged food e.g. allowing food to arrive at domicile still hot (pizzas, hot take-away snacks, etc.) This advantageous solution presents, however, the inconvenience of the high cost of the aluminium sheet lining. Furthermore, as the aluminium sheet is extremely fine it is easily torn, thus allowing the food to come in contact with the underlying cardboard which is certainly not hygienic. It is also to be noted that however pure the aluminium may be, it remains an oxidizable metal and is therefore toxic, especially if in contact with corrosive foods. Lastly, the aluminium surface normally tends to adhere to the food and it is then difficult to separate them and, especially if the food remains in contact for a certain time, as in the case of desserts, there is the consequent danger of deteriorating the foodstuff (e.g. desserts and cakes) at the moment of the respective separation.

Attempts have been made to laminate the aluminium sheet with plastic, but this involves extremely high costs both for the lamination treatment and for the necessity to always use the underlying aluminium sheet.

Plastic laminated cardboards for foodstuffs are also known, but these do not possess the underlying aluminium sheet, with the inevitable loss of inward reflection.

Attempts to cover the cardboard with a metallized plastic film have given imperfect results due to the poor adherence between the metallized film and the cardboard.

The scope of the present invention is to eliminate the above-mentioned inconveniences.

It has been discovered from experiments carried out that the poor final adherence of the plastic lamination in the product derives mainly from a low fact of immediate adherence, and therefore in the successive operations of manipulation of the materials which undergo inevitable flexures when passing through the tranmission rollers and during the final winding, this adherence is further decreased thus compromising the desired degree of final adherence, which is completed after approx. 2 hours or even more, depending on the type of sizing.

Another scope of the invention is to improve the degree of immediate adherence.

During studies on the motives which compromise said degree of total adherence, it has further been discovered that it is to be principally attributed to the metallized layer which, in itself, constitutes a detaching element.

A further scope of the present invention is to improve the degree of final adherence in addition to the degree of immediate adherence.

The present invention solves the problem, according to the characteristics given in the attached claims, by means of a production method for metallized laminated plastic cardboard in particular for alimentary use and for respective product, of the type involving a supporting structure in cardboard, laminated in plastic on the surface of contact with foodstuffs, with a metallized layer interposed between laminated plastic and cardboard, where said lamination comprises the sizing (a5) on the cardboard (b) with at least one transparent plastic film (a), with metallized layer (a5) having partial degree of coverage, that is to say, in such a manner that said sizing (a5) can take on the plastic structure of the film (a3) by passing through the said metallized layer (a4).

Said lamination advantageously comprises the sizing on the cardboard with at least one stabilized two-sided coextruding polypropylene film having the upper surface in heat-weldable copolymer and the lower surface in metallizable monomer, with metallized layer having a low degree of coverage with deposit parameters between 2 and 5 Ohm, preferably 2.5-3.5 Ohm, and in any case for a 30%-80% degree of coverage, preferably 50%-60%.

The advantages obtained with this innovation consist essentially in that the degree of adherence obtained results as maximum, as the low degree of coverage allows the sizing to interact between the cardboard and plastic film surfaces, passing through the respective metallizing spraying which, as claimed, does not present a degree of total coverage.

The sizing has a solvent or suspension vehicle which is advantageous to size the metallized film to the cardboard as the vehicle is dried before joining in order to obtain said immediate sizing.

The sheet of polypropylene used advantageously foresees a triple two-faced layering, respectively copolymer-monomer-monomer. High quality results are thus obtained.

According to the experiments carried out, it has been further seen that the use of polyurenthan sizings having ethyl/toluol acetate vehicle are advantageous for the process, giving excellent results of final adherence between cardboard and metallized surface of the monomer layer of the polypropylene film.

The invention is hereafter explained in further detail with the assistance of the drawings giving the preferential realization solutions, the execution details of which are not to be held as limiting but only as examples.

Figure 1 shows a schematic production process of the metallized laminated plastic cardboard, ar per the present invention.

Figure 2 gives an enlarged cross section of the laminated plastic cardboard, according to the invention, in a convenient form of realization.

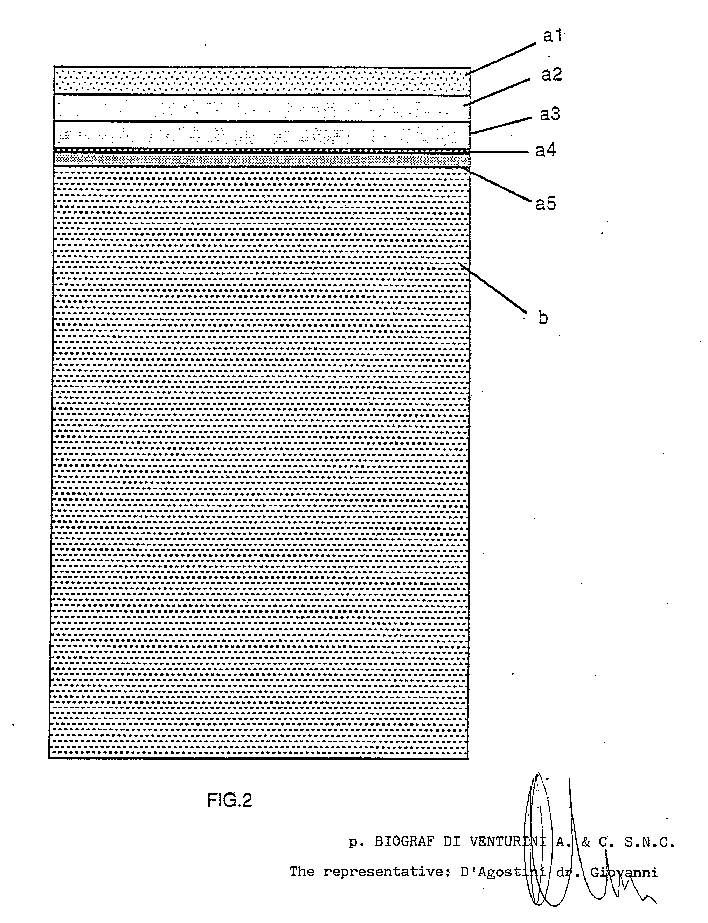

With reference to Figure 2, the laminated plastic cardboard is shown as per the invention, of the type comprising a cardboard supporting structure (b), of laminated plastic (a) on the surface in contact with foodstuffs and with interposed metallized layer (a4) between laminated plastic (a) and cardboard (b), where said laminated plastic comprises the sizing (a5) on the cardboard (b) with at least one stabilized two-faced coextruding polypropylene film (a) with the upper surface in heat-weldable copolymer (a1) and the lower surface in metallizable monomer (a3), with metallized layer having a low degree of coverage with deposit parameters between 2 and 5 Ohm, preferably 2.5-3.5 Ohm, and in any case for a 30%-80% degree of coverage, preferably 50%-60%.

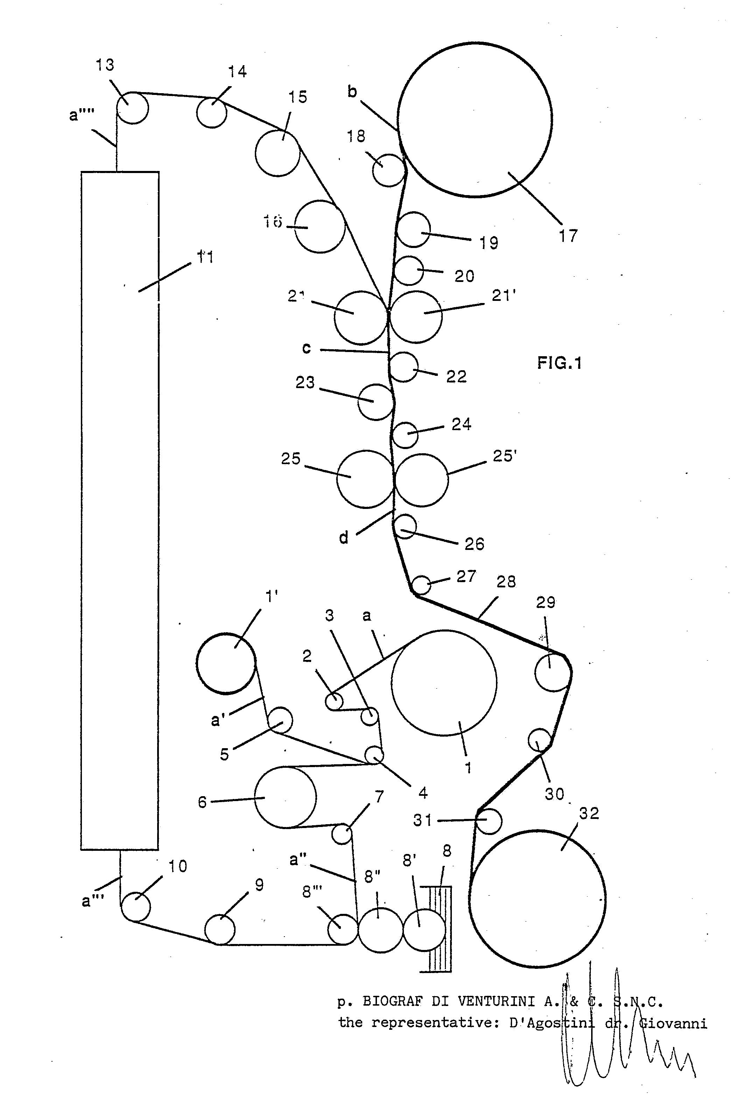

With reference to Figure 1, where the system is shown in horizontal development but it is understood that the system can be extended horizontally, vertically or even slanted, the process foresees:
- starting from a roll of metallized film having a low degree of coverage, of the type mentioned above (1),
- by means of opportune transmission and stretcher rollers (2,3) cut the film (a) longitudinally to the desired width by means of a cutting roller having adjustable knife (4) so that the scrap (a′) is wound onto a scrap bobbin (1′) in cooperaton with a stretcher deviating roller (5);
- by means of opportune transmission and stretcher rollers (6,7), subject the trimmed film (a″ + a1 + a2 + a3 + a4) on the metallized side to the spreading of the sizing by an engageable and disengageable transmission roller (8‴) which presses the film against a roller which spreads the sizing (8″) and which receives if from an underlying suction roller (8′) on a sizing tank (8) situated below;
- through further transmission rollers (9,10), subject the film spread with sizing (a‴ + a1 + a2 + a3 + a4 + a5) to a drying process by going through a tunnel furnace (11) having temperature adjustable from $30°$ C to $80°$ C, approx. 3m long, with progress speed of 20-30 meters per minute, temperature limit $140°$ C and speed of 120 m/minute;
- by means of further transmission rollers (13,14,15) subject the dried film (a⁗) to a transversal stretching by a rubberized convex roller (16) in order to eliminate eventual longitudinal wrinkles which may appear due to the drying;
- by means of roller and counter-roller (21,21′), of which at least one is heated to a temperature of $20°$-$80°$ C, join the dried film (a⁗) to the supporting cardboard (b) supplied by bobbin (17) with the help of eventual transmission and stretching rollers (18,19,20);
- and by means of further transmission and stretching rollers (22,23,24), trim the joined edges (c) with a pair of trimming rollers (25,25′);
- transport the trimmed, joined material (d) by means of stretching and transmission rollers (26,27,28,29,30,31) to a reel system (32).

The thickness, consistency and type of cardboard (b) will obviously vary in function of the specific purpose. Its opposite surface can be covered with paper for alimentary use or other during successive treatments not here illustrated, and the same can be said for the upper laminated plastic surface (a1) which can receive further coverings e.g. for advertising purposes, by heat welding.

The polypropylene film is advantageously two-faced and coextruded for metallizing barrier with one heat-weldable face and the other metallized at low coverage according to the parameters indicated in the claims.

An example of polypropylene film of this copolymer-monomer-monomer type is "Manucor S1M" (registered trademark of Manuli Autoadesivi Spa 20093 Cologno Monzese Milan Viale Europa 40/42) which is metallized on the monomer side at a low level of coverage, Ohm value between 2.5 and 3.5.

The sizing utilized is a polyurethan with 30% polyurethan resin dry pp and 70% pp ethyl/toluen 70/30 acetate diluent, in this specific case the resin is produced by ROL (Montedison Group) Corso Sempione 13, Castellanza, corresponding to "PRBINDER" 330 (manufacturer's trademark).

Other sizings such as, for example, vinylic types with water base, may be naturally be used in place of polyurethan sizings, even though they give results which are more or less appreciable.

## Claims

1. Production method for metallized, laminated plastic cardboard ,in particular for alimentary use and for respective product, of the type involving a supporting structure in cardboard (b), with laminated plastic (a) on the surface in contact with foodstuffs, and a metallized layer (a4) interposed between laminated plastic (a) and cardboard (b), characterized by the fact that said laminated plastic comprises the sizing (a5) to the cardboard (b) with at least one transparent plastic film (a), with metallized layer (a5) having a partial degree of coverage, that is to say, in such a manner that said sizing (a5) can take on the plastic structure of the film (a3) by passing through said metallized layer (a4).

2. Production method for metallized, laminated plastic cardboard, in particular for alimentary use and for respective product, as per claim 1, characterized by the fact that said laminated plastic includes the sizing (a5) on the cardboard (b) at least one transparent plastic film (a),, with metallized layer (a5) at a low degree of coverage, deposit parameters from 2-5 Ohm, preferably 2.5-3.5 Ohm, and in any case for a 30%-80% degree of coverage, preferably 50%-60%.

3. Production method for metallized, laminated plastic cardboard, in particular for alimentary use and for respective product, as per clim 1, characterized by the fact that said laminated plastic includes the sizing (a5) on the cardboard (b) with at least one polypropylene film (a) having the metallized surface in monomer (a3).

4. Production method for metallized, laminated plastic cardboard, in particular for alimentary use and for respective product, as per claim 1, characterized by the fact that said laminated plastic includes the sizing (a5) on the cardboard (b) with at least one stabilized, two-faced, coextruding, polypropylene film(a) having an upper surface in heat-weldable copolymer (a1) and a lower surface in metallized (a4) monomer (a3).

5. Production method for metallized, laminated plastic cardboard, in particular for alimentary use and for respective product, as per claim 1, charaterized by the fact that said laminated plastic includes the sizing (a5) on the cardboard (b) with at least one stabilized, two-faced, coextruding, polypropylene film (a) with an upper surface in heat-weldable copolymer (a1), an intermediate surface in monomer (a2) and a lower surface in metallized (a4) monomer (a3).

6. Production method for metallized, laminated plastic cardboard, in particular for alimentary use and for respective product, as per claim 1, charaterized by the fact that in order to size the metallized film (a1 + a2 + a3 + a4) to the cardboard (b), sizing (a5) having solvent or suspension vehicle is used, where the vehicle (11) is dried before joining is carried out by heated opposed rollers (21,21').

7. Production method for metallized, laminated plastic cardboard, in particular for alimentary use and for respective product, as per claim 1, characterized by the fact that to size the metallized film (a1 + a2 + a3 + a4) to the cardboard (b), sizing (a5) is used which has solvent or suspension vehicle which is dried in a tunnel furnace at at temperature of over 30°C (11) before joining by means of opposed, heated rollers (21,21').

8. Production method for metallized, laminated plastic cardboard, in particular for alimentary use and for respective product, as per claim 1, characterized by the fact that to size the metallized film (a1 + a2 + a3 + a4) to the cardboard (b), sizing (a5) is used having a solvent or suspension vehicle where, before joining by means of opposed rollers (21,21') with heating between 20°C and 80°C, the vehicle is dried in a tunnel furnace (11) at a temperature between 30°C-80°C for a run of 2-4m at a speed of 10-50 meters for minute.

9. Production method for metallized, laminated plastic cardboard, in particular for alimentary use and for respective product, as per claim 1, characterized by the fact that the type of sizing used has a polyurethan resin base diluted with ethyl and toluol acetate.

10. Production method for metallized, laminated plastic cardboard, in particular for alimentary use and for respective product, as per claim 1, characterized by the fact that the type of sizing used has a polyurethan resin base diluted with ethyl and toluol acetate at 20%-40% dry p.p., preferably 30%.

11. Production method for metallized, laminated plastic cardboard, in particular for alimentary use and for respective product, as per claim 1, characterized by the fact that the type of sizing used has a polyurethan resin base diluted with ethyl and toluol acetate at 20%-40% dry p.p., preferably 30%, while the ethyl/toluol acetate diluent has 70/30 p.p.

FIG.1

p. BIOGRAF DI VENTURINI A. & C. S.N.C.
the representative: D'Agostini dr. Giovanni

FIG.2

p. BIOGRAF DI VENTURINI A. & C. S.N.C.

The representative: D'Agostini dr. Giovanni